# EUROPEAN PATENT APPLICATION

(11) **EP 4 671 221 A1**
(43) Date of publication of application: **31.12.2025**
(21) Application number: 24760378.0
(22) Date of filing: 20.02.2024
(51) Int. Cl.: C03C 27/12, B32B 17/10, G02F 1/13, G02F 1/15, G02F 1/137, G02F 1/167, G02F 1/169, G02F 1/1333, G02F 1/1334, G02F 1/1347

(54) **LAMINATED PANEL INTERLAYER FILM STRUCTURE AND LAMINATED PANEL STRUCTURE**

(30) Priority: 20.02.2023 JP 2023024417
(71) Applicant: Sekisui Chemical Co., Ltd., Osaka-shi, Osaka 530-8565 (JP)
(72) Inventor: NAKAJIMA, Daisuke, 6041LE Roermond (NL); IZU, Yasuyuki, Mishima-gun, Osaka 618-0021 (JP)
(74) Representative: Ter Meer Steinmeister & Partner
(86) International application number: PCT/JP2024/006112
(87) International publication number: WO 2024/177080

(57) **Abstract**

Provided are: an interlayer film structure for a laminated panel capable of obtaining a sufficient contrast difference between the maximum visible light transmittance and the minimum visible light transmittance upon control of the light transmittance while having the effect of shielding heat, and a laminated panel structure. The interlayer film structure for a laminated panel of the invention is an interlayer film structure 1 to be used with being sandwiched between two transparent panels 30 and 31, including thermoplastic resin sheets 20 and 21 and a light control component 10 that is disposed with being sandwiched inbetween the thermoplastic resin sheets 20 and 21, in laminated glass fabricated by bonding the two clear glass plates 30 and 31 via the interlayer film structure for laminated glass, a difference in visible light transmittance between upon driving of the light control component and upon non-driving thereof being 20% or more, and either upon driving of the light control component or upon non-driving thereof, a total solar transmittance (Tts) being 70% or less.

## Description

### Technical Field

The present invention relates to an interlayer film structure for a laminated panel, to be used with being sandwiched between two transparent panels, and a laminated panel structure.

### Background Art

In recent years, along with the progress of smartification such as smart homes and smart mobility, there is a demand also for panels, which are materials constituting devices, to be equipped with smart functions that are exhibit through electrical control.

In order to address the smartification of laminated panel structures, which are a type of panel, it is necessary to incorporate a smart component (light control component) that exhibit its functions through electrical control into the laminated panel. For the purpose of embedding light control components of various shapes and thicknesses in the laminated panel structure, it is necessary to sandwich them between at least two interlayer films.

In laminated panel structures, a representative example of a smart component (light control component) that exhibits its function through electrical control is a film that reversibly controls a light transmittance, i.e., a light control film. To date, laminated panel structures with light control functions, having incorporated light control films of various light control systems (PDLC, SPD, EC) have been investigated (see, for example, Patent Literature 1).

In a laminated panel structure having incorporated a light control film, special glass such as infrared reflecting plate glass may be used from the viewpoint of a heat shielding property and inhibition of heat deterioration of the light control film. The special glass used works effectively in improving the heat shielding property and inhibiting the heat deterioration of the laminated panel structure, on the other hand, reduces the transmittance thereof due to the effect to the special glass, as a result of which a difference between the maximum visible light transmittance and the minimum visible light transmittance upon control of the light transmittance, becomes small, thereby arising a problem that a satisfactory contrast difference cannot be obtained.

### Citation List

### Patent Literature

PTL1: WO 2010/021276

### Summary of Invention

### Technical Problem

Therefore, the present invention has been completed in view of the problems described above, and an object of the present invention is to provide an interlayer film structure for a laminated panel capable of obtaining a sufficient contrast difference between the maximum visible light transmittance and the minimum visible light transmittance upon control of the light transmittance while having the effect of shielding heat, and a laminated panel structure.

### Solution to Problem

The gist of the present invention is as follows:
[1] An interlayer film structure for a laminated panel, to be used with being sandwiched between two transparent panels, including: a thermoplastic resin sheet; and a light control component that is disposed with being sandwiched inbetween the thermoplastic resin sheet, in laminated glass fabricated by bonding two clear glass plates via an interlayer film structure for laminated glass, a difference in visible light transmittance between upon driving of the light control component and upon non-driving thereof being 20% or more, and either upon driving of the light control component or upon non-driving thereof, a total solar transmittance (Tts) being 70% or less.
[2] The interlayer film structure for a laminated panel according to [1], wherein the thermoplastic resin sheet includes a heat shielding material.
[3] The interlayer film structure for a laminated panel according to [1] or [2], wherein the thermoplastic resin sheet includes a first thermoplastic resin layer and a second thermoplastic resin layer, and the light control component is disposed between the first thermoplastic resin layer and the second thermoplastic resin layer.
[4] The interlayer film structure for a laminated panel according to [3], wherein at least one of the first thermoplastic resin layer or the second thermoplastic resin layer includes a heat shielding material.
[5] The interlayer film structure for a laminated panel according to any one of [1] to [4], wherein the light control component is an electrically controlled light control body.
[6] A laminated panel structure including: two transparent panels; and an interlayer film for a laminated panel that is disposed between the two transparent panels, the interlayer film for a laminated panel including a thermoplastic resin sheet and a light control component that is disposed with being sandwiched inbetween the thermoplastic resin sheet; and a difference in visible light transmittance between upon driving of the light control component and upon non-driving thereof being 20% or more, and either upon driving of the light control component or upon non-driving thereof, a total solar transmittance (Tts) being 70% or less.

### Advantageous Effects of Invention

According to the present invention, there can be provided an interlayer film structure for a laminated panel capable of obtaining a sufficient contrast difference between the maximum visible light transmittance and the minimum visible light transmittance upon control of the light transmittance while having the effect of shielding heat, and a laminated panel structure.

### Brief Description of Drawings

[Fig. 1] Fig. 1 is a schematic cross-sectional view illustrating the interlayer film structure for a laminated panel according to an embodiment of the present invention (Embodiment 1).
[Fig. 2] Fig. 2 is a schematic cross-sectional view illustrating the interlayer film structure for a laminated panel according to an embodiment of the present invention (Embodiment 2).
[Fig. 3] Fig. 3 is a schematic cross-sectional view illustrating the interlayer film structure for a laminated panel according to an embodiment of the present invention (Embodiment 3).
[Fig. 4] Fig. 4 is a schematic view illustrating use of the interlayer film structure for a laminated panel according to an embodiment of the present invention.

### Description of Embodiments

The present invention will be described below with reference to embodiments.

### <Interlayer film structure for laminated panel>

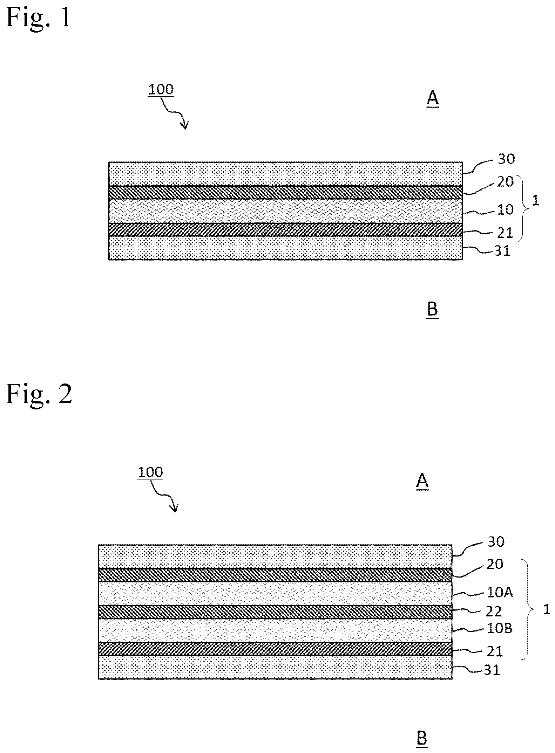

The interlayer film structure 1 for a panel (hereinafter also referred to as an "interlayer film structure") according to an embodiment of the present invention is to be used with being sandwiched between two transparent panels 30 and 31 as shown in Fig. 1. The interlayer film structure 1 is disposed with being sandwiched inbetween thermoplastic resin sheets. In one embodiment, the thermoplastic resin sheet includes a first thermoplastic resin layer 20 and a second thermoplastic resin layer 21, and a light control component 10 is disposed between the first thermoplastic resin layer 20 and the second thermoplastic resin layer 21. Specifically, the interlayer film structure 1 includes the first thermoplastic resin layer 20 to be disposed on a transparent panel 30 side, the second thermoplastic resin layer 21 to be disposed on a transparent panel 31 side, and the light control component 10 to be disposed between the first thermoplastic resin layer 20 and the second thermoplastic resin layer 21. The first thermoplastic resin layer 20 and the second thermoplastic resin layer 21 are integrated with the light control component 10 to form the thermoplastic resin sheet.

In a laminated panel, the transparent panel 30 is disposed on the outdoor side A, and the transparent panel 31 on the indoor side B. Therefore, the first thermoplastic resin layer 20 is disposed on the outdoor side A, and the second thermoplastic resin layer 21 is disposed on the indoor side B, and for example, when used for a vehicle such as an automobile, the first thermoplastic resin layer 20 is disposed on an outer side of the vehicle, and the second thermoplastic resin layer 21 on an inner side of the vehicle.

### [Difference in visible light transmittance]

In laminated glass fabricated by bonding two clear glass plates via the interlayer film structure 1, the interlayer film structure 1 of the present invention has a difference in visible light transmittance between upon driving of the light control component 10 and upon non-driving thereof of 20% or more. The difference in visible light transmittance between upon driving of the light control component 10 and upon non-driving thereof refers to a difference between the maximum visible light transmittance and the minimum visible light transmittance upon control of the light transmittance by operating the light control component 10 to be driven and not to be driven. The difference in visible light transmittance of less than 20% reduces the difference between the maximum visible light transmittance and the minimum visible light transmittance upon control of the light transmittance, as a result of which a satisfactory contrast difference cannot be obtained.

From the viewpoint of maintaining a high contrast, the difference in visible light transmittance is preferably 15% or more, more preferably 20% or more, and still more preferably 25% or more. The greater the contrast difference, the more favorable it is, and the difference in visible light transmittance is favorably 75% or less, and preferably 50% or less in terms of practical use.

It is to be noted that the laminated glass fabricated under predetermined conditions refers to a laminated panel structure obtained by bonding two sheets of standard clear glass with a thickness of 2.5 mm via the interlayer film structure 1 under the conditions described in Examples.

### (Visible light transmittance in light transmission mode of light control component)

In the interlayer film structure 1 of the present invention, when the light control component 10 is driven or not driven, whichever has a higher visible light transmittance is referred to as a light transmission mode. In laminated glass fabricated by bonding two clear glass plates via the interlayer film structure 1, the interlayer film structure 1 of the present invention favorably has a visible light transmittance measured in a light transmission mode of higher than 20%, but preferably has 25% or more, more preferably 30% or more, and still more preferably 35% or more.

Also, the visible light transmittance is preferably 75% or less, more preferably 60% or less, and still more preferably 50% or less.

In the case of the light control component 10 operating in a light transmission mode, the light control component 10 having a high visible light transmittance allows an outside to be easily seen through the panel structure, and can easily achieve a higher contrast compared to that in a light shielding mode. Also, a large amount of external light can be brought inside through the laminated panel structure, so that a certain amount of external light can be brought in even in bad weather or at night, providing a feeling of openness even in such environments.

### (Visible light transmittance in light shielding mode of light control component)

In the interlayer film structure 1 of the present invention, when the light control component 10 is driven or not driven, whichever has a lower visible light transmittance is referred to as a light shielding mode. In laminated glass fabricated by bonding two clear glass plates via the interlayer film structure 1, the interlayer film structure 1 of the present invention preferably has a visible light transmittance measured in a light shielding mode of 5% or less. Also, the visible light transmittance is more preferably 0.1% or more and 3% or less and more preferably 0.2% or more and 2% or less.

As described above, the visible light transmittance so as to be able to be modulated to 5% or less sufficiently shields visible light by the interlayer film structure 1 for a laminated panel, and when used, for example, in window glass, in particular roof glass, for automobiles, it prevents an inner side of a vehicle from being exposed to sunlight and also facilitates prevention of heat deterioration of the light control component. Furthermore, the visible light transmittance modulated to 0.1% or more transmits a certain amount of visible light, thereby preventing the vehicle from being completely shaded by the interlayer film structure 1 for a laminated panel, providing a certain feeling of openness.

### [Total solar transmittance (Tts)]

In the interlayer film structure 1 of the present invention, laminated glass fabricated by bonding two clear glass plates via the interlayer film structure 1 has a total solar transmittance (Tts) of 70% or less. The total solar transmittance (Tts) greater than 70% reduces a heat shielding property, which may reduce the effect of inhibiting heat deterioration. Tts, which is an abbreviation of Total Solar Transmittance, is known as an index of the heat shielding property, and the smaller the value, the higher the heat shielding property is meant to be.

The total solar transmittance (Tts) is preferably 65% or less, preferably 60% or less, still more preferably 55% or less, and yet still more preferably 50% or less. From the viewpoint of enhancing the heat shielding property, the lower the total solar transmittance (Tts), the more favorable it is, as long as it is 0% or more, and is preferably 20% or more in terms of practical use. The total solar transmittance (Tts) as used herein may fall within the above range either upon driving of light control component 10 or upon non-driving thereof, and is preferably within the above range in the case of the light control component 10 that operates in a light transmission mode.

Incidentally, the clear glass plate used in measurements of visible light transmittance and the total solar transmittance (Tts) has a thickness of 2.5 mm and visible light transmittance of 90.5% as measured in accordance with JIS R 3106:1998. The clear glass plate also has a* = -0.6, b* = 0.2, and a haze of 0.2% or less using CIE standard illuminant D65 and a 10° field of view color matching function, specified in JIS Z 8781-1 (2012), JIS Z 8781-2 (2012), and JIS Z 8781-4 (2013). This clear glass plate is also called standard clear glass.

### [Thermoplastic resin layer]

As described above, the interlayer film structure 1 includes a thermoplastic sheet containing a thermoplastic resin. Also, in one embodiment, the interlayer film structure 1 includes the first thermoplastic resin layer 20 and the second thermoplastic resin layer 21 that constitute the thermoplastic resin sheet.

The first thermoplastic resin layer 20 and the second thermoplastic resin layer 21 are layers containing a thermoplastic resin. The first thermoplastic resin layer 20 and the second thermoplastic resin layer 21 containing the thermoplastic resin facilitate them to function as adhesive layers, resulting in favorable adhesiveness between the light control component 10 and the transparent panels 30 and 31.

The thermoplastic resin is not particularly limited, but examples thereof include a polyvinyl acetal resin, an ethylene - vinyl acetate copolymer resin, an ionomer resin, a polyurethane resin, a thermoplastic elastomer, an acrylic resin, an acrylic - vinyl acetate copolymer resin, a polyvinyl alcohol resin, a polyolefin resin, a polyvinyl acetate resin, a polystyrene resin, and the like. Use of these resins facilitates adhesiveness thereof to the light control component 10 and the transparent panels 30 and 31 to be ensured.

In each of the first thermoplastic resin layer 20 and the second thermoplastic resin layer 21, the thermoplastic resin may be used singly or in combination of two or more thereof.

Of the resins described above, at least one selected from a polyvinyl acetal resin and an ethylene - vinyl acetate copolymer resin is also preferred, and particularly when used in combination with a plasticizer, from the viewpoint of exhibiting excellent adhesiveness to the transparent panels 30 and 31 composed of glass or the like, the polyvinyl acetal resin is more preferred.

A resin constituting the first thermoplastic resin layer 20 and the second thermoplastic resin layer 21 may be appropriately selected from the resins listed above. Also, the resins constituting each thermoplastic resin layer may be different from each other, but are preferably the same. Therefore, the resins constituting the first thermoplastic resin layer 20 and the second thermoplastic resin layer 21 are preferably both polyvinyl acetal resins or ethylene - vinyl acetate copolymer resins and more preferably both polyvinyl acetal resins.

### (Polyvinyl acetal resin)

The polyvinyl acetal resin is not particularly limited as long as it is a polyvinyl acetal resin obtained by acetalizing a polyvinyl alcohol (PVA) with an aldehyde.

The above-described aldehyde is not particularly limited, but generally, an aldehyde having 1 to 10 carbon atoms is preferably used. The above aldehyde having 1 to 10 carbon atoms is not particularly limited, and examples thereof include n-butyl aldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, benzaldehyde, and the like. These aldehydes may be used singly or in combination of two or more thereof.

Of the aldehydes described above, n-butylaldehyde, n-hexylaldehyde, and n-valeraldehyde are preferred with n-butylaldehyde being more preferred. Therefore, the polyvinyl acetal resin is preferably a polyvinyl butyral resin.

The polyvinyl alcohol (PVA) is obtained, for example, by saponifying a polyvinyl ester such as polyvinyl acetate. The degree of saponification of polyvinyl alcohol is generally 70 to 99.9 mol%. The polyvinyl acetal resin may be used singly or in combination of two or more thereof.

An average degree of polymerization of PVA is preferably 200 or more, more preferably 500 or more, still more preferably 1,000 or more, and even still more preferably 1,500 or more. The average degree of polymerization being the above lower limit value or more allows penetration resistance of the laminated panel structure to be higher. Also, the average degree of polymerization of the PVA is preferably 5,000 or less, more preferably 4,000 or less, still more preferably 3,500 or less, and even still more preferably 2,500 or less.

The average degree of polymerization of the polyvinyl alcohol is determined by the method in accordance with JIS K 6726 "Testing methods for polyvinyl alcohol."

The amount of hydroxyl groups in the polyvinyl acetal resin is preferably 15 mol% or more and preferably 38 mol% or less. The amount of hydroxyl groups being 15 mol% or more is likely to results in favorable adhesiveness and favorable penetration resistance of the laminated panel structure. Also, the amount of hydroxyl groups of 38 mol% or less prevents the laminated panel structure from being too hard. From the viewpoint of adhesiveness to a glass plate, the amount of hydroxyl groups is more preferably 20 mol% or more and still more preferably 25 mol% or more. The amount of hydroxyl groups is also more preferably 35% or less and still more preferably 33 mol% or less.

In a case in which a polyvinyl butyral resin is used as the polyvinyl acetal resin, from the same viewpoint, the amount of hydroxyl groups is 15 mol% or more, preferably 38 mol% or less, more preferably 20 mol% or more, still more preferably 25 mol% or more, and more preferably 35% or less and still more preferably 33 mol% or less.

The amount of hydroxyl groups in the polyvinyl acetal resin is a value denoted as a percentage, which is a molar fraction calculated by dividing the amount of ethylene groups to which hydroxyl groups are bonded by the total amount of ethylene groups in the main chain. The amount of ethylene groups to which the hydroxyl groups are bonded can be measured, for example, in accordance with JIS K 6728 "Testing methods for polyvinyl butyral."

The degree of acetalization of the above polyvinyl acetal resin is preferably 47 mol% or more and preferably 85 mol% or less. The above degree of acetalization is more preferably 55 mol% or more and still more preferably 60 mol% or more, and more preferably 80 mol% or less and still more preferably 75 mol% or less.

It is to be noted that when an acetal group is a butyral group and a polyvinyl acetal resin (A) is a polyvinyl butyral resin, the degree of acetalization refers to a degree of butyralization.

The above-described degree of acetalization is a value denoted as a percentage, which is a molar fraction determined by dividing, by the total amount of ethylene groups in the main chain, a value obtained by subtracting from the total amount of ethylene groups in the main chain, the amount of ethylene groups to which hydroxyl groups are bonded and the amount of ethylene groups to which acetyl groups are bonded. The degree of acetalization (degree of butyralization) may be calculated from the results measured in accordance with, for example, JIS K 6728 "Testing methods for polyvinyl butyral".

The degree of acetylation of the polyvinyl acetal resin is preferably 30 mol% or less, more preferably 20 mol% or less, still more preferably 10 mol% or less, and even still more preferably 2 mol% or less. When the degree of acetylation is the above upper limit value or less, the interlayer film structure for a laminated panel and the laminated panel structure have high moisture resistance. Also, the degree of acetylation is not particularly limited, but is preferably 0.01 mol% or more and more preferably 0.1 mol% or more.

The degree of acetylation is a value denoted as a percentage, which is a molar fraction determined by dividing the amount of ethylene groups to which acetyl groups are bonded by the total amount of ethylene groups in the main chain. The amount of ethylene groups to which the acetyl groups are bonded can be measured, for example, in accordance with JIS K 6728 "Testing methods for polyvinyl butyral."

### (Ethylene - vinyl acetate copolymer resin)

The ethylene - vinyl acetate copolymer resin may be a non-crosslinked ethylene - vinyl acetate copolymer resin, or a high-temperature crosslinked ethylene - vinyl acetate copolymer resin. Also, as the ethylene - vinyl acetate copolymer resin, modified ethylene - vinyl acetate resins such as a saponified ethylene - vinyl acetate copolymer and a hydrolyzed ethylene - vinyl acetate can also be used.

The ethylene - vinyl acetate copolymer resin has a vinyl acetate content of preferably 10 to 50% by mass and more preferably 20 to 40% by mass, as measured in accordance with JIS K 6730 "Testing methods for ethylene - vinyl acetate resin" or JIS K 6924-2:1997. The vinyl acetate content of these lower limit values or more increases adhesiveness to glass and facilitates penetration resistance of the laminated panel structure to be favorable. Also, the vinyl acetate content of these upper limit values or less results in enhanced breaking strength of the interlayer film structure 1 for a laminated panel and favorable impact resistance of the laminated panel structure.

### (Plasticizer)

The thermoplastic resin sheet preferably contains a plasticizer. More specifically, both the first thermoplastic resin layer 20 and the second thermoplastic resin layer 21 preferably further contain a plasticizer. Addition of the plasticizer allows the first thermoplastic resin layer 20 and the second thermoplastic resin layer 21 to be flexible, resulting in a flexible interlayer film structure 1 for a laminated panel as well. Also, the use of interlayer film structure 1 for a laminated panel for the laminated panel structure enhances flexibility of the laminated panel structure and penetration resistance thereof, further making it possible to exhibit high adhesiveness to the light control component 10 and the transparent panels 30 and 31.

In a case in which a polyvinyl acetal resin is used as the thermoplastic resin, the plasticizer is particularly effective when contained in each thermoplastic resin layer. Therefore, the first thermoplastic resin layer 20 more preferably contains a polyvinyl acetal resin and a plasticizer. It is also more preferable that the second thermoplastic resin layer 21 also contains the polyvinyl acetal resin and the plasticizer.

Examples of the plasticizers include organic ester plasticizers such as a monobasic organic acid ester and a polybasic organic acid ester, phosphorus plasticizers such as an organophosphate plasticizer and an organophosphite plasticizer, and the like. Of these, the organic ester plasticizer is preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprilate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified alkyd sebacic acid, a mixture of a phosphoric acid ester and an adipic acid ester, an adipic acid ester of a mixture type, and the like. An example of the adipic acid ester of a mixture type includes an adipic acid ester formed of two or more alcohols selected from an alkyl alcohol having 4 to 9 carbon atoms and a cyclic alcohol having 4 to 9 carbon atoms.

Of the above-described plasticizers, triethylene glycol-di-2-ethylhexanoate (3GO) is particularly suitable for use.

The content of the plasticizer in each of the first thermoplastic resin layer 20 and the second thermoplastic resin layer 21 is not particularly limited, but is preferably 10 parts by mass or more and 100 parts by mass or less relative to 100 parts by mass of the thermoplastic resin. The content of the plasticizer being 10 parts by mass or more allows the interlayer film structure 1 to be moderately flexible. Therefore, the use of interlayer film structure 1 in the laminated panel structure results in favorable penetration resistance or the like of the laminated panel structure. Also, the content of the plasticizer of 100 parts by mass or less prevents the plasticizer from being separated from the thermoplastic resin layer. The content of the plasticizer is more preferably 20 parts by mass or more, still more preferably 30 parts by mass or more, still more preferably 35 parts by mass or more, and more preferably 70 parts by mass or less, and still more preferably 63 parts by mass or less. The content of the plasticizer in each of the first thermoplastic resin layer 20 and the second thermoplastic resin layer 21 may be the same as or different from each other.

The first thermoplastic resin layer 20 and the second thermoplastic resin layer 21 are each mainly composed of a resin, or a resin and a plasticizer, and the total amount of thermoplastic resin and plasticizer in each of the first thermoplastic resin layer 20 and the second thermoplastic resin layer 21 is usually 70% by mass or more, preferably 80% by mass or more and less than 100% by mass, and more preferably 90% by mass or more and less than 100% by mass, based on the total amount of each thermoplastic resin layer.

### (Heat shielding material)

The thermoplastic resin sheet preferably contains a heat shielding material. Specifically, at least one of the first thermoplastic resin layer 20 and the second thermoplastic resin layer 21 preferably contains a heat shielding material. The first thermoplastic resin layer 20 and the second thermoplastic resin layer 21, containing the heat shielding material demonstrate heat shielding performance and facilitate the total solar transmittance (Tts) to increase, while preventing the visible light transmittance from being reduced largely in a light transmission mode, resulting in facilitating the above-described difference in visible light transmittance to increase. Also they exhibit the effect of inhibiting heat deterioration of the interlayer film structure 1. From the viewpoint of efficiently exhibiting the effect of inhibiting heat deterioration of the light control component 10, the first thermoplastic resin layer 20 to be disposed on an outdoor side A preferably contains at least the heat shielding material.

A typical heat shielding material is a material capable of absorbing infrared rays with a wavelength of 780 nm or more, i.e., heat rays. A heat shielding material made of an inorganic material is typically used. Specific examples thereof include a metal oxide particle and a particle other than the metal oxide particle, such as a lanthanum hexaboride (LaB6) particle. Examples of the metal oxide particle include tin oxide particles such as an aluminum-doped tin oxide particle, an indium-doped tin oxide particle, and an antimony-doped tin oxide particle (ATO particle), zinc oxide particles such as a gallium-doped zinc oxide particle (GZO particle), an indium-doped zinc oxide particle (IZO particle), an aluminum-doped zinc oxide particle (AZO particle), a tin-doped zinc oxide particle, and a silicon-doped zinc oxide particle, a titanium oxide particle such as a niobium-doped titanium oxide particle, an indium oxide particle such as a tin-doped indium oxide particle (ITO particle), and tungsten oxide particles such as a sodium-doped tungsten oxide particle, a cesium-doped tungsten oxide particle (CWO particle), a thallium-doped tungsten oxide particle, and a rubidium-doped tungsten oxide particle. Also, a heat shielding material other than these may be used. The heat shielding materials may be used singly or in combination of two or more types thereof.

Among these, the metal oxide particles are preferred due to their high heat ray shielding function, and it is more preferable to use at least one selected from the group consisting of the ATO particle, the GZO particle, the ITO particle, and the CWO particle, and it is still more preferable to use the ITO particle or the CWO particle.

As described above, the first thermoplastic resin layer 20 preferably contains the heat shielding material, and in this case, the content of the heat shielding material in the first thermoplastic resin layer 21 is not particularly limited, but is, for example, 0.01% by mass or more and 10% by mass or less, preferably 0.05% by mass or more and 5% by mass or less, and more preferably 0.1% by mass or more and 3% by mass or less, based on the total amount of each thermoplastic resin layer. The content of the heat shielding material of the lower limit value or more makes it possible to appropriately prevent an inner side of a vehicle or a room to become too hot and to inhibit the heat deterioration of the light control component. Furthermore, the content of the heat shielding material of the upper limit value or less facilitates achievement of high contrast.

Similarly, the second thermoplastic resin layer 21 may also contain a heat shielding material, in which case, the content of the heat shielding material in the second thermoplastic resin layer 21 is not particularly limited, but may be, for example, 0.01% by mass or more and 10% by mass or less, preferably 0.05% by mass or more and 5% by mass or less, and more preferably 0.1% by mass or more and 3% by mass or less, based on the total amount of each thermoplastic resin layer. The content of the heat shielding material of the lower limit value or more appropriately prevents an inner side of a vehicle or a room to become too hot. Also, the content of the heat shielding material of the upper limit value or less facilitates achievement of high contrast.

In the case of both the first thermoplastic resin layer 20 and the second thermoplastic resin layer 21 containing the heat shielding material, the content of the heat shielding material in each of the first thermoplastic resin layer 20 and the second thermoplastic resin layer 21 may be the same as each other. With the proviso that from the viewpoint of obtaining a high contrast while appropriately preventing heat deterioration, the above-described content in the first thermoplastic resin layer to be disposed on an outdoor side A is preferably more than the content in the second thermoplastic resin layer to be disposed on an indoor side B.

Also, from the viewpoint of obtaining a high contrast while appropriately preventing heat deterioration, an aspect of the first thermoplastic resin layer 20 to be disposed on the outdoor side A, containing a heat shielding material and the second thermoplastic resin layer 20 to be disposed on the indoor side B, not containing a heat shielding material, is also preferable.

The lower limit of an average particle size of the heat shielding material is preferably 10 nm and more preferably 20 nm, and the upper limit thereof is preferably 100 nm and more preferably 80 nm, and still more preferably 50 nm. The average particle size of the above described preferred lower limit or more enables enhancing the heat ray shielding property sufficiently. Also, the average particle size of the above-described preferred upper limit or less is less likely to shield visible light by the heat shielding material more than necessary. It is to be noted that the "average particle size" denotes a volume average particle size. The average particle size can be measured using a particle size distribution measuring apparatus ("UPA-EX150" manufactured by Nikkiso Co., Ltd.) or the like.

The thermoplastic resin sheet of the present invention, i.e., the first thermoplastic resin layer 20 and the second thermoplastic resin layer 21, may appropriately contain various additives such as a coloring agent, an antioxidant, a light stabilizer, an ultraviolet ray absorber, and an antioxidant, in addition to the heat shielding material.

A thickness of the first thermoplastic resin layer 20 is not particularly limited, but is, for example, 0.05 mm or more, preferably 0.1 mm or more, and more preferably 0.2 mm or more. Also, the thickness of the first thermoplastic resin layer 20 is not particularly limited, but is, for example, 1 mm or less, preferably 0.8 mm or less, and more preferably 0.5 mm or less. The first thermoplastic resin layer 20 having a thickness of the above-described lower limit or more facilitates heat shielding performance to be demonstrated. Furthermore, the first thermoplastic resin layer 20 having a thickness of the above upper limit value or less can obtain sufficient transparent visibility in a light transmission mode without increasing a thickness of the interlayer film structure 1 for a laminated panel more than necessary.

A thickness of the second thermoplastic resin layer 21 is not particularly limited, but is, for example, 0.05 mm or more, preferably 0.1 mm or more, and more preferably 0.2 mm or more. Also, the thickness of the second thermoplastic resin layer 21 is not particularly limited, but is, for example, 1 mm or less, preferably 0.8 mm or less, and more preferably 0.5 mm or less. The second thermoplastic resin layer 21 having a thickness of the above lower limit value or more facilitates heat shielding performance to be demonstrated. Also, the second thermoplastic resin layer 21 having a thickness of the above upper limit value or less can obtain sufficient transparent visibility in a light transmission mode without increasing a thickness of the interlayer film structure 1 for a laminated panel more than necessary.

The first thermoplastic resin layer 20 and the second thermoplastic resin layer 21 for use can be commercially available products, for example, "S-LEC Film" series manufactured by SEKISUI CHEMICAL CO., LTD.

The first thermoplastic resin layer 20 and the second thermoplastic resin layer 21 may have a multi-layered configuration including a heat shielding film composed of different materials in order to further enhance the heat shielding performance. For example, in the case of a heat ray reflective PET film included as the heat shielding film, the first thermoplastic resin layer 20 and the second thermoplastic resin layer 21 can be configured to be stacked in the order of thermoplastic resin layer/heat ray reflective PET film/thermoplastic resin layer.

The principle of the heat shielding function of the heat shielding film is not particularly limited, but examples of the film include a heat ray absorbing film and a heat ray reflective film.

An example of the heat ray absorbing film includes a film including a heat shielding material capable of absorbing infrared rays with a wavelength of 780 nm or more, i.e., heat rays. The heat shielding material is composed of an inorganic material, and specific examples thereof include a metal oxide particle and a particle other than the metal oxide particle, such as a lanthanum hexaboride (LaB6) particle. Examples of the metal oxide particle include tin oxide particles such as an aluminum-doped tin oxide particle, an indium-doped tin oxide particle, and an antimony-doped tin oxide particle (ATO particle), zinc oxide particles such as a gallium-doped zinc oxide particle (GZO particle), an indium-doped zinc oxide particle (IZO particle), an aluminum-doped zinc oxide particle (AZO particle), a tin-doped zinc oxide particle, and a silicon-doped zinc oxide particle, a titanium oxide particle such as a niobium-doped titanium oxide particle, an indium oxide particle such as a tin-doped indium oxide particle (ITO particle), and tungsten oxide particles such as a sodium-doped tungsten oxide particle, a cesium-doped tungsten oxide particle (CWO particle), a thallium-doped tungsten oxide particle, and a rubidium-doped tungsten oxide particle. Also, a heat shielding material other than these may be used. The heat shielding materials may be used singly or in combination of two or more types thereof. Among these, the metal oxide particles are preferred due to their high heat ray shielding function, and it is more preferable to use at least one selected from the group consisting of the ATO particle, the GZO particle, the ITO particle, and the CWO particle, and it is still more preferable to use the ITO particle or the CWO particle.

The heat ray reflective film may have suitable infrared reflectivity, and an example thereof includes a film containing Ag, Zn, Ti, Sn, Cr, Nb, Ta, Al, In, ITO, ATO, AZO, GZO, or IZO as a main ingredient that reflects infrared rays. The heat ray reflective film with these components may be used as a metal film or a transparent electrically conductive film, and may contain these components as particles in a film or a resin. Furthermore, a laminated film stacked with a metal film or transparent electrically conductive film using the above-described components as the main ingredients and a dielectric film or the like, may be used. Alternatively, the heat ray reflective layer may be an optical interference film stacked with multiple dielectric films. Also, it may be configured to be stacked with layers having different refractive indexes on each other.

A film material for the heat shielding film is not particularly limited, and an example thereof includes a film selected from the group consisting of polyethylene terephthalate, polyethylene naphthalate, polycarbonate, polymethyl methacrylate, polyethersulfone, nylon, polyarylate, polyethylene, polypropylene, a cycloolefin polymer, polystyrene, and polyvinylidene fluoride, or a film copolymerized with two or more thereof.

### [Light control component]

The light control component 10 may be any component that changes a visible light transmittance upon non-driving of the light control component and upon driving thereof, which is preferably a light control body that uses electricity, heat, light, or gas as a control factor and more preferably a light control component with a control factor of electricity. The light control component 10 has a high visible light transmittance in a light transmission mode. Also, in a light shielding mode (light scattering mode), the light control component 10 has a lower visible light transmittance than that in a light transmission mode. Furthermore, in a light shielding mode (light scattering mode), the haze value is generally higher than that in a light transmission mode.

Examples of the light control component 10 include a polymer-dispersed liquid crystal (PDLC) film, a suspended particle device (SPD) film, an electrochromic film, an electrophoretic film device, a polymer network liquid crystal (PNLC) film, or a guest-host liquid crystal (GHLC) film, of which the PDLC film and SPD film are preferable.

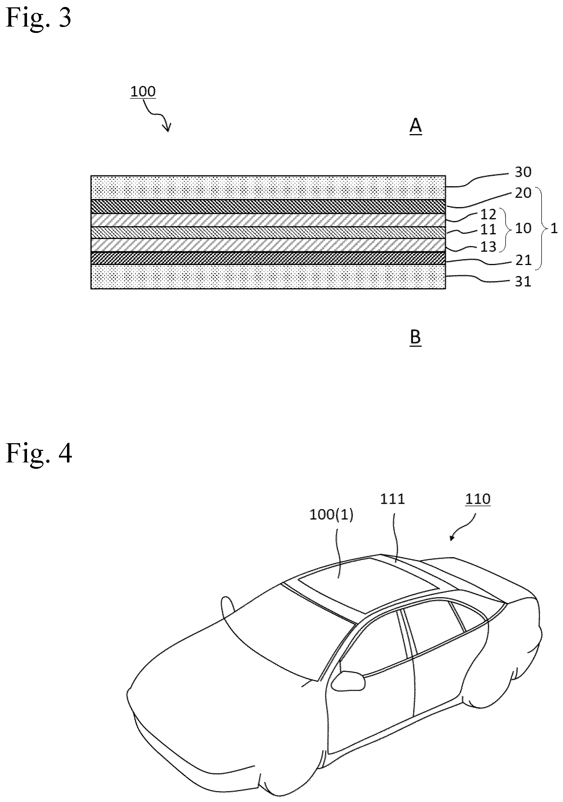

As shown in Fig. 3, for example, the light control component 10 includes a first substrate film 12 to be disposed on a side of the first thermoplastic resin layer 20, a second substrate film 13 to be disposed on a side of the second thermoplastic resin layer 21, and a light control layer 11 to be disposed between the first substrate film 12 and the second substrate film 13.

Examples of the first substrate film 12 and the second substrate film 13 include resin films that use, as a resin component, a polyester resin such as polyethylene terephthalate or polyethylene naphthalate, an acrylic-based resin, a cellulose derivative such as triacetylcellulose (TAC), a polyethersulfone (PES) resin, a polyimide resin, or the like. Of these, the polyester resin film is preferred from the viewpoint of handleability or the like, and of these, the polyethylene terephthalate film is more preferred.

Also, an electrode layer is preferably provided on a surface of each of the first substrate film 12 and the second substrate film 13, facing the light control layer 11. The electrode layer is not particularly limited for use as long as it is an electrode material having conventional transparency, and examples thereof include an indium tin oxide (ITO) conductive film, a tin oxide conductive film, a zinc oxide conductive film, a polymer conductive film, and the like. Of these, the ITO conductive film is preferable. The electrode layer is connected with an extraction electrode, and voltage may be applied between the electrode layers via the extraction electrodes.

### << PDLC film>>

The light control layer in the PDLC film is, for example, a liquid crystal layer, and is composed of a polymer-dispersed liquid crystal. An example of the polymer-dispersed liquid crystal includes those called a network-type liquid crystal, in which a network structure is formed by a polymer in the liquid crystal layer.

An example of the liquid crystal layer includes a layer in which a space for filling an inside thereof with the liquid crystal is formed by using a spacer or the like and the space is filled with the liquid crystal and sealed, but the spacer may not be used. The liquid crystal may also be of any type, and may be of a TN type or a STN type. An orientation film may be appropriately provided between the light control layer and the electrode layer. The PDLC film provided with the orientation film can be of a reverse type, which will be described later.

The PDLC film being applied voltage between the electrode layers changes an orientation state of the liquid crystal layer and is switched between light transmission and light scattering. The PDLC film may be of either a normal type or a reverse type. The normal type operates in a light transmission mode when applied voltage (voltage ON) and when applied no voltage (voltage OFF), it operates in a light shielding mode (also called a "light scattering mode"). The reverse type operates in a light transmission mode when applied no voltage and operates in a light scattering mode when applied voltage.

As described above, the PDLC film has high visible light transmittance and a small haze value in the light transmission mode. The PDLC film has specific visible light transmittance in a light transmission mode of, for example, 60% or more, preferably 70% or more, and more preferably 75% or more. By having the above-described visible light transmittance, light transmittance of the laminated panel structure can be increased sufficiently in a light transmission mode, and when in use, for example, in roof glass of an automobile, a sufficient feeling of openness can be obtained.

Also, the haze value of the PDLC film in a light transmission mode is, for example, 30% or less, preferably 20% or less, and more preferably 10% or less.

It is to be noted that the visible light transmittance of the PDLC film in a light transmission mode may be 100% or less and practically 99% or less, and the haze value thereof may be 0% or more and practically, for example, 1% or more.

In a light shielding mode (light scattering mode), on the other hand, the haze value of the PDLC film is, for example, 70% or more, preferably 80% or more, and more preferably 90% or more. Such a high haze value in the light scattering mode causes a high light shielding property and can appropriately prevent inflow of heat rays in the light scattering mode. Also, sufficient image clarity can be obtained when in use as a screen.

Also, in a light scattering mode, the visible light transmittance of the PDLC film is lower than that in the light transmission mode, which is for example, 40% or less, preferably 20% or less, and more preferably 10% or less. As described above, when the light transmittance is lowered in the light scattering mode, inflow of heat rays can be appropriately prevented in the light scattering mode. Also, the PDLC film can obtain sufficient image clarity when used as a screen.

It is to be noted that the haze value of the PDLC film in a light scattering mode may be 100% or less and is practically approximately 99% or less. The visible light transmittance may also be 0% or more and is practically approximately 1% or more.

The PDLC film operates in either a light scattering mode or a light transmission mode when applied no voltage, and in that mode, the haze value and visible light transmittance may fall within the above-described ranges. In a state of voltage application, the PDLC film also operates in the other mode of the light scattering mode and the light transmission mode, and in that mode, the haze value and visible light transmittance may be as described above, but the voltage value applied is not limited, and the haze value and visible light transmittance may be those described above at any voltage value.

It is to be noted that the visible light transmittance of the PDLC film may be measured using a spectrophotometer in accordance with JIS R 3106:2019. The haze value may also be measured using a haze meter (for example, "TC-HIIIDPK" manufactured by TokyoDenshoku Co., Ltd.) in accordance with JIS K 6714.

A thickness of the PDLC film is not particularly limited, and is, for example, 0.05 mm or more and 2 mm or less, preferably 0.1 mm or more and 1 mm or less, and more preferably 0.2 mm or more and 0.8 mm or less.

The PDLC film for use may be a commercially available product. Specific examples thereof include a normal type of the "LC MAGIC" series manufactured by Toppan Printing Co., Ltd. [in a light transmission mode: a haze value 5%, parallel ray transmittance 82%, and in a light scattering mode: a haze value 98%, parallel ray transmittance 1% (catalogue value)] and a reverse type [in a light transmission mode: a haze value 10%, parallel ray transmittance 80%, and in a light scattering mode: a haze value 92%, parallel ray transmittance 7% (catalogue value)]. Furthermore, examples thereof include a window type of "UMU" manufactured by NSG UMU PRODUCTS CO.,LTD. [in a light transmission mode: a haze value 6%, parallel ray transmittance 74%, and in a light scattering mode: a haze value 86%, parallel ray transmittance 5% (catalogue value)] and the like. Other examples thereof include "LC-W" manufactured by Gauzy Ltd. and the like.

### <<SPD Film>>

The light control layer in an SPD (Suspended Particle Device) film is a layer including a resin matrix and a light modulation suspension dispersed in the resin matrix. The resin matrix is composed of a polymer medium, and the light modulation suspension is a suspension in which light modulation particles have been dispersed in a dispersion medium in a flowable state. The polymer medium and dispersion medium (dispersion medium in the light modulation suspension) for use are those capable of undergoing phase separation from each other at least when the polymer medium, a cured product thereof, and the dispersion medium, which have been formed into a film. It is preferable to use a combination of a polymer medium and a dispersion medium which are incompatible or partially compatible with each other.

The polymer medium includes a resin with a substituent having an ethylenically unsaturated bond and a photopolymerization initiator, and an example thereof includes a polymer medium that is cured by irradiation with energy rays such as ultraviolet rays, visible light, and electron beams. The resin with an ethylenically unsaturated bond is preferably a silicone-based resin, an acrylic-based resin, a polyester resin, and the like.

In addition to the above-described resin with a substituent having an ethylenically unsaturated bond, an organic solvent-soluble resin or a thermoplastic resin, such as polyacrylic acid or polymethacrylic acid, can also be combined for use as a constituent material of the polymer medium.

Also, an additive such as an anti-coloring agent such as dibutyltin dilaurate, may be added in the polymer medium, if necessary. Furthermore, the polymer medium may contain a solvent.

The dispersion medium in the light modulation suspension, is preferably a liquid copolymer that plays the role of a dispersion medium in the light modulation suspension, selectively adheres to and covers a light modulation particle, acts so as to move to a liquid drop phase in which the light modulation particles underwent phase separation upon phase separation from the polymer medium, has no electrical conductivity, and has no compatibility with the polymer medium.

The liquid copolymer is preferably, for example, a (meth)acrylic acid ester oligomer having a fluoro group and/or a hydroxyl group, and more preferably a (meth)acrylic acid ester oligomer having a fluoro group and a hydroxyl group.

The light modulation suspension to be used in the present invention is a light modulation suspension in which a light modulation particle is dispersed to be flowable in a dispersion medium. The light modulation particle which is, for example, a crystal of polyiodide, is used with a small needle-shaped crystal of polyiodide being preferably used.

When the SPD film is applied voltage between two electrode layers, the light modulation particles undergo orientation in the thickness direction, whereby a light transmittance, for example the transmittance in a particular wavelength range favorably increases.

Also, in the SPD film, a primer layer may be appropriately provided between the light control layer and the electrode layer.

When applied no voltage between electrode layers (voltage OFF), the SPD film has a low light transmittance and operates in a light shielding mode. A voltage applied between the electrode layers (voltage ON) enhances the transmittance of a specific wavelength range, for example, whereby the SPD film is switched from a light shielding mode to a light transmission mode. The SPD film may also change a color tone when irradiated with visible light according to a change in visible light transmittance, and for example, the SPD film can be colorless and transparent when applied voltage, while having a color tone such as blue when applied no voltage. It is to be noted that when a magnitude of the voltage applied between the electrodes is changed, a magnitude of the visible light transmittance of the SPD film in a light transmission mode is also changed.

The SPD film of a commercially available product can be used. Specific examples thereof include a Light type of "LCF-1103DHA" manufactured by Hitachi Chemical Company, Ltd. [in a light transmission mode: visible light transmittance 45 to 65% (50 to 100V), a haze value 6%, in a light shielding mode: visible light transmittance 3% (catalog value)] and a Dark type [in a light transmission mode: visible light transmittance 30 to 53% (50 to 100V), a haze value 6%, in a light shielding mode: visible light transmittance 1% (catalog value)]. Also, an example of the SPD film includes "SPD" manufactured by Gauzy Ltd.

### <<Electrochromic film>>

The light control layer in the electrochromic film may contain an electrochromic material. The electrochromic material is not limited as long as it is a compound having an electrochromic property, and may be any of an inorganic compound, an organic compound, and a mixed valence complex.

Examples of the inorganic compound include Mo₂O₃ Ir₂O₃, NiO, V₂O₃, WO₃, TiO₂, and the like, with WO₃ being preferred among them. Examples of the organic compound include a polypyrrole compound, a polythiophene compound, a polyparaphenylenevinylene compound, a polyaniline compound, a polyacetylene compound, a polyethylenedioxythiophene compound, a metal phthalocyanine compound, a viologen compound, a viologen salt compound, a ferrocene compound, a dimethyl terephthalate compound, a diethyl terephthalate compound, and the like, with the polyacetylene compound being preferred among them. Examples of the mixed valence complex include Prussian blue complexes (KFe[Fe(CN)₆] and the like).

The electrochromic film changes the transmittance in, for example, a specific wavelength range when applied voltage between electrode layers, whereby, a light control body is changed from a state of a high visible light transmittance (light transmission mode) to a state of a low visible light transmittance (light shielding mode). In addition thereto, the light control body may also be changed in color tone when irradiated with visible light. For example, it can be colorless and transparent when applied no voltage, while it has a color tone such as blue, yellow, green, or red when applied voltage.

A thickness of the electrochromic film is not particularly limited, but is, for example, 0.05 mm or more and 2 mm or less, preferably 0.1 mm or more and 1 mm or less, and more preferably 0.2 mm or more and 0.8 mm or less.

The electrochromic film of a commercially available product can be used. A specific example thereof includes an electrochromic film manufactured by Ynvisible, Inc.

### <<Electrophoretic film device>>

The electrophoretic film device has, for example, an electrophoretic section between two substrates each having an electrode layer. The electrophoretic section contains, for example, electrophoretic particles and a dispersant dispersing the electrophoretic particles.

In the electrophoretic film device as well, changing whether or not voltage is applied between the electrode layers enables a state of a high visible light transmittance (light transmission mode) and a state of a low visible light transmittance (light shielding mode) to be changed. A specific example of the electrophoretic film device is described in detail in US 2016/0124284A and the like.

A thickness of the electrophoretic film device is not particularly limited, but is, for example, 0.05 mm or more and 2 mm or less, preferably 0.1 mm or more and 1 mm or less, and more preferably 0.2 mm or more and 0.8 mm or less.

The electrophoretic film device of a commercially available product can be used. Specific examples thereof include "E-Skin" manufactured by Signify Health Inc., and the like.

### <<PNLC Film>>

The light control layer in the polymer network liquid crystal film is a polymer network liquid crystal layer disposed between two films.

The PNLC film changes an orientation state of the liquid crystal layer when applied voltage between electrode layers, and is switched between light transmission and light scattering. The PNLC film may be either a normal type or a reverse type. The normal type operates in a light transmission mode when applied voltage (voltage ON) and operates in a light shielding mode (also called a "light scattering mode") when applied no voltage (voltage OFF). Also, the reverse type operates in a light transmission mode when applied no voltage and operates in a light scattering mode when applied voltage.

A thickness of the PNLC film is not particularly limited, but is, for example, 0.05 mm or more and 2 mm or less, preferably 0.1 mm or more and 1 mm or less, and more preferably 0.2 mm or more and 0.8 mm or less.

The PNLC film of a commercially available product can be used. Specific examples thereof include a reverse type of the "LC MAGIC" series manufactured by Toppan Printing Co., Ltd.

### <<GHLC film>>

The light control layer in the GHLC film is constituted of a dichroic coloring matter (guest) and a liquid crystal (host). The dichroic coloring matter has a different light absorbance depending on the axial direction, so that it can create a light transmitting state and a light shielding state by following the movement of the liquid crystal.

A thickness of the GHLC film is not particularly limited, but is, for example, 0.05 mm or more and 2 mm or less, preferably 0.1 mm or more and 1 mm or less, and more preferably 0.2 mm or more and 0.8 mm or less.

### [Switch]

The interlayer film structure 1 for a laminated panel may include a switch member (not shown). The switch member is a member for controlling the light control component 10. The switch member may control whether or not voltage is applied between electrode layers of the light control component 10 by switch input. This allows the switch member to switch the light control component 10 to a light transmission mode and a light shielding mode.

The switch member may be disposed outside the interlayer film structure 1 for a laminated panel, and is preferably composed of a touch sensor disposed inside the interlayer film structure 1 for a laminated panel. Therefore, the light control component 10 is preferably controlled by the touch sensor.

The aforementioned description is based on the premise that the configuration includes one light control component; however, two or more light control components may be provided. In the case of two or more components to be provided, as shown in Fig. 2, for example, the two light control components may be disposed along the thickness direction. In the case of two light control components 10A and 10B to be disposed along the thickness direction, a third thermoplastic resin layer 22 may be further disposed between the two light control components 10A and 10B, and the two light control components 10A and 10B may be allowed to adhere to each other via the third thermoplastic resin layer 22. Also, the first thermoplastic resin layer 20 may be disposed on an outside of the light control component 10A, and the second thermoplastic resin layer 21 may be disposed on an outside of the light control component 10B.

Also, the configuration of two or more light control components to be provided can include not only a configuration thereof disposed along the thickness direction as shown in Fig. 2, but also a configuration of two or more light control components to be disposed along the width direction (within the same plane). Furthermore, the light control component for use may be a light control component that undergoes segment processing within one plane and functions as two or more light control components.

The details of the first and second thermoplastic resin layers 20 and 21 are as described above. Also, the third thermoplastic resin layer 22 is a layer having a thermoplastic resin, as with the first and second thermoplastic resin layers 20 and 21, and the details thereof are the same as those of the second thermoplastic resin layer 21, and therefore the description thereof will be omitted. Incidentally, the third thermoplastic resin layer 22 preferably contains a plasticizer, as with the second thermoplastic resin layer 21, and may or may not contain a heat shielding material, and the details thereof are also the same as those of the second thermoplastic resin layer 21.

In the case of a plurality of light control components to be provided, three or more light control components may be provided, and in this case as well, a thermoplastic resin sheet may be disposed between each of the light control components. In this case, the thermoplastic resin layer to be disposed between each of the light control components is the same as the third thermoplastic resin layer described above.

It is to be noted that Fig. 1 schematically shows an aspect of the light control component provided in the entire region of the interlayer film structure 1, however, it is not necessary to be provided in the entire region thereof, and it may be provided in part thereof, and for example, the light control component 10 may not be provided on an outer edge portion thereof. In this case, in a portion where the light control component 10 is not provided, the first and second thermoplastic resin layers 20 and 21 may directly adhere to each other. Also, a ring-shaped or frame-shaped thermoplastic resin sheet that surrounds the light control component 10 may be disposed on a circumferential side of the light control component 10, in which case, the first and second thermoplastic resin layers 20 and 21 and the thermoplastic resin layer on the circumferential side may adhere to each other. In the case of the light control component 10 to be provided in part thereof, it is advisable to measure a visible light transmittance and the total solar transmittance (Tts) in the region where the light control component is to be provided.

Also, regarding "upon driving or upon non-driving" of the light control component 10, when the interlayer film structure 1 of the present invention has a plurality of light control components 10A and 10B, as shown in Fig. 2, either of the light control component 10A or 10B may be switched in a driving mode or non-driving mode. Therefore, when either one or two or more of the plurality of light control components 10A and 10B are switched in a driving mode or non-driving mode, a difference in visible light transmittance may fall within the above range. Also, either upon driving of either one or two or more of the above-described light control components 10A and 10B or upon non-driving thereof, the total solar transmittance (Tts) may stay within the above range, and the total solar transmittance (Tts) may stay within the above range in a light transmission mode.

### [Adhesive layer]

For example, the interlayer film structure 1 for a laminated panel may be provided with an adhesive layer (not shown) at least either between the first thermoplastic resin layer 20 and the light control component 10 or between the second thermoplastic resin layer 21 and the light control component 10, and the light control component 10 may be adhered to at least one of the first thermoplastic resin layer 20 and the second thermoplastic resin layer 21 via the adhesive layer. With the proviso that the light control component 10 is preferably directly adhered to the first thermoplastic resin layer 20, whereas no adhesive layer is provided between these sheets. Similarly, the light control component 10 is preferably directly adhered to the second thermoplastic resin layer 21.

Also, for example, the interlayer film structure 1 for a laminated panel may be provided with an adhesive layer on the outer side of at least either of the first thermoplastic resin layer 20 and the second thermoplastic resin layer 21, and at least either of the first thermoplastic resin layer 20 and the second thermoplastic resin layer 21 may be adhered to the transparent panels 30 and 31 via the adhesive layer. However, it is preferable that no adhesive layer is provided on the outer side of the first thermoplastic resin layer 20, and that the first thermoplastic resin layer 20 is directly adhered to the transparent panel 30. It is similarly preferable that no adhesive layer is provided on the outer side of the second thermoplastic resin layer 21, and that the second thermoplastic resin layer 21 is directly adhered to the transparent panel 31.

Also, in the case of two or more light control components to be provided, a thermoplastic resin sheet is preferably further provided between the light control components as described above, but the thermoplastic resin sheet may directly adhere to the light control component or may adhere thereto via another layer such as an adhesive layer. The adhesive layer is not particularly limited and may be composed of a known material, for example, the above-described thermoplastic resin.

### (Method for producing interlayer film structure)

In the present invention, the method for producing an interlayer film structure includes preparing, first, a light control component and a resin film for forming each thermoplastic resin layer.

The light control component and the resin films may then be appropriately overlaid. For example, in the case of one light control component as shown in Fig. 1, two resin films may be prepared and overlaid in order of the resin film / the light control component / the resin film. In the case of two light control components, three resin films may be prepared and overlaid in order of the resin film / the light control component / the resin film / the light control component / the resin film. In the case of three or more light control components, the resin film / the light control component may be alternately stacked in a similar manner.

Also, in a case in which an adhesive layer is provided between the light control component and the thermoplastic resin layer, on a surface of the interlayer film structure, or the like, a resin film for forming an adhesive layer may be prepared and appropriately overlaid.

As described above, a laminate obtained by overlaying the light control component and the resin film can be pressed in a thickness direction or undergo thermocompression under a negative pressure to produce an interlayer film structure.

### <Laminated panel structure>

As shown in Fig. 1, the laminated panel structure 100 of the present invention includes the interlayer film structure 1 described above and the two transparent panels 30 and 31, and the interlayer film structure 1 is disposed with being sandwiched between the two transparent panels 30 and 31. In the laminated panel structure 100, the two transparent panels 30 and 31 are bonded via the interlayer film structure 1 described above. The configuration of each member of the interlayer film structure 1 was as described above.

Examples of the transparent panels 30 and 31 include glass plates. The glass plate may be either inorganic glass or organic glass, but preferably inorganic glass. Examples of the inorganic glasses include, but are not particularly limited to, clear glass, clear float glass, a float glass plate, tempered glass, colored glass, a polished glass plate, a patterned glass plate, a wired glass plate, a lined glass plate, an ultraviolet absorbing glass plate, an infrared reflecting glass plate, an infrared absorbing glass plate, green glass, low reflective glass, etc.

As the organic glass, glass generally called resin glass is used, and examples thereof include, but are not particularly limited to, organic glass composed of a polycarbonate plate, a polymethyl methacrylate plate, a polyester plate and the like.

From the viewpoint of obtaining a satisfactory contrast difference, the two transparent panels 30 and 31 are preferably made of a material with a high visible light transmittance and is preferably made of, for example, clear glass.

Also, from the viewpoint of a heat shielding property, either of the two transparent panels 30 and 31 may be either infrared reflecting plate glass or infrared absorbing plate glass, in which case, the transparent panel 30 on an exterior side of a vehicle is preferably either infrared reflecting plate glass or infrared absorbing plate glass. Moreover, it is more preferable that the transparent panel 30 on the exterior side of the vehicle is either infrared reflecting plate glass or infrared absorbing plate glass, and the transparent panel 31 on an interior side of the vehicle is more preferably clear glass. The transparent panel 30 on the exterior side of the vehicle being either infrared reflecting plate glass or infrared absorbing plate glass, facilitates the heat deterioration of light control component to be more effectively prevented.

The two transparent panels 30 and 31 may be composed of the same material or different materials. For example, one panel may be inorganic glass and the other organic glass, but both of the two transparent panels 30 and 31 are preferably inorganic glass or organic glass, and more preferably inorganic glass.

A thickness of each of the transparent panels 30 and 31 is not particularly limited, but is preferably 0.5 mm or more and 3.2 mm or less, more preferably 0.7 mm or more and 2.7 mm or less, and still more preferably 1.0 mm or more and 2.6 mm or less. The thickness within the above range keeps a thickness of the entire laminated panel structure below a certain level while imparting a certain mechanical strength to the laminated panel structure 100.

The laminated panel structure 100 of the present invention preferably has a thickness of 7 mm or less. When the thickness is 7 mm or less, the laminated panel structure 100 can be suitably used for window glass for automobiles, particularly roof glass for automobiles. Also, the lower limit value of the thickness of the laminated panel structure is not particularly limited, but is, for example, 4 mm or more and preferably 5 mm or more.

### [Difference in visible light transmittance of laminated panel structure]

The laminated panel structure 100 of the present invention has a difference in visible light transmittance of 20% or more between upon driving of the light control component 10 and upon non-driving thereof. The difference in visible light transmittance between upon driving of the light control component 10 and upon non-driving thereof refers to a difference between the maximum visible light transmittance and the minimum visible light transmittance when the light transmittance is controlled by operating the light control component 10 to be driven or not to be driven. The difference in visible light transmittance difference of less than 20% reduces a difference between the maximum visible light transmittance and the minimum visible light transmittance upon control of the light transmittance, resulting in not obtaining a sufficient contrast difference.

From the viewpoint of maintaining a high contrast, the difference in visible light transmittance is preferably 25% or more, more preferably 30% or more, and still more preferably 35% or more. The difference in visible light transmittance may be 75% or less although the greater the contrast difference, the more favorable it is, and is preferably 50% or less in terms of practical use.

### (Visible light transmittance upon operation of light control component in light transmission mode)

In the laminated panel structure 100 of the present invention, when the light control component 10 is driven or not driven, whichever has a higher visible light transmittance is referred to as a light transmission mode. In laminated glass fabricated by bonding the two clear glass plates 30 and 31 via the interlayer film structure 1, the laminated panel structure 100 of the present invention may have a visible light transmittance measured in a light transmission mode of 20% or more, and is preferably 25% or more, more preferably 30% or more, and still more preferably 35% or more.

Also, the visible light transmittance is preferably 75% or less, more preferably 60% or less, and even more preferably 50% or less.

In the case of the light control component 10 operating in a light transmission mode, light control component 10 having a high visible light transmittance allows an outside to be easily seen through the laminated panel structure, and can easily achieve a higher contrast compared to that in a light shielding mode. Also, a large amount of external light can be brought inside through the laminated panel structure, so that a certain amount or more of external light can be brought in even in bad weather or at night, providing a feeling of openness even in such environments.

### (Visible light transmittance upon operation of light control component in light shielding mode)

In the laminated panel structure 100 of the present invention, when the light control component 10 is driven or not driven, whichever has a lower visible light transmittance is referred to as a light shielding mode. In laminated glass fabricated by bonding the two clear glass plates 30 and 31 via the interlayer film structure 1, the laminated panel structure 100 of the present invention preferably has a visible light transmittance measured in a light shielding mode of 5% or less. Also, the visible light transmittance is more preferably 0.1% or more and 3% or less and still more preferably 0.2% or more and 2% or less.

As described above, the visible light transmittance so as to be modulated to 5% or less sufficiently shields visible light in the interlayer film structure 1 for a laminated panel and when used, for example, in window glass, in particular roof glass, for automobiles, it prevents an inner side of the automotive from being exposed to sunlight, and also makes it more likely to prevent heat deterioration of the light control component. Furthermore, the visible light transmittance modulated to 0.1% or more transmits a certain amount of visible light, thereby preventing the automobile from being completely shaded by the interlayer film structure for a laminated panel 1 and providing a certain feeling of openness.

### [Total solar transmittance (Tts) of laminated panel structure]

The laminated panel structure 100 of the present invention has a total solar transmittance (Tts) of 70% or less. The total solar transmittance (Tts) of more than 70% reduces the heat shielding property and the effect of inhibiting heat deterioration. Tts, which is an abbreviation of Total Solar Transmittance, is known as an index of the heat shielding property, and the smaller the value, the higher the heat shielding property is meant to be.

The above-described total solar transmittance (Tts) is preferably 65% or less, more preferably 60% or less, still more preferably 55% or less, and yet still more preferably 50% or less. From the viewpoint of enhancing the heat shielding property, the lower the total solar transmittance (Tts), the more favorable it is, as long as it is 0% or more, which is preferably 5% or more in terms of practical use. The total solar transmittance (Tts) as used herein may fall within the above range either upon driving of the light control component 10 or upon non-driving thereof, and is preferably within the above range in the case of the light control component 10 that operates in a light transmission mode.

### (Method for producing laminated panel structure)

The method for producing a laminated panel structure is not particularly limited, and it can be obtained, for example, by disposing the interlayer film structure between two transparent panels, which undergoes thermocompression using an autoclave or the like.

Also, in the present invention, a laminated panel structure may be produced while forming an interlayer film structure. Specifically, the light control component and the resin films for the thermoplastic resin layer may be appropriately overlaid and undergo thermocompression using an autoclave or the like in a state where the resulting laminate overlaid is disposed between the two transparent panels, then to obtain a laminated panel structure while forming an interlayer film structure.

### [Use]

The interlayer film structure 1 and the laminated panel structure 100 of the present invention can be used for window glass of various vehicles such as automobiles, aircraft, ships and buildings, but are preferably used for vehicles.

In automobiles, heat rays from outer side of a vehicle may flow into the vehicle through window glass, making an inner side of the vehicle hot. Similarly, in buildings, heat rays may flow into a building through window glass, rendering an inner side of the building hot; however, as described above, the interlayer film structure 1 of the present invention has a total solar transmittance (Tts), particularly the total solar transmittance (Tts) in a light transmission mode, which is a predetermined value or less, and therefore can prevent an inner side of a vehicle or a building from becoming hot.

Also, when used as a light control component, the light control body that operates in a light shielding mode and shields light, can appropriately prevent heat rays from flowing inner side the vehicle or building.

On the other hand, the light control component that operates in a light transmission mode and has a higher visible light transmittance, allows an outside to be easily viewed through the panel structure, making it possible to easily achieve a high contrast compared to that in a light shielding mode.

The interlayer film structure 1 for a laminated panel and the laminated panel structure 100 of the present invention are also particularly preferably used in automobiles, and when used therein, they can be used for any window glass such as side glass, rear glass, or roof glass. As shown in Fig. 4, the interlayer film structure 1 for a laminated panel and the laminated panel structure 100 are preferably used as roof glass at a roof portion 111 of an automobile 110. The interlayer film structure 1 for a laminated panel and the laminated panel structure 100 of the present invention, which are used as roof glass have a likelihood of further providing a feeling of openness.

At least a portion of the roof glass may be disposed on a roof, and for example, glass disposed across the roof and a rear portion is also considered as roof glass. It is to be noted that a roof of an automobile is a portion constituting a top surface of the body, and roof glass is generally disposed horizontally or slightly tilted (for example, within 20°) with respect to the horizontal direction. The tilt is a tilt of a straight line to the horizontal direction, which is connected between an end of the glass disposed at a roof position and the other end thereof.

Also, the roof glass has an area of, for example, 0.5 mm² or more, preferably 1 m² or more, and more preferably 1.5 m² or more.

The interlayer film structure 1 for a laminated panel and the laminated panel structure 100 of the present invention can be used by appropriately switching a light transmission mode and a light shielding mode of the light control component 10 to appropriately modulate a visible light transmittance.

For example, in the case of a desire to shield light from outside, the light control component 10 may operate in a light shielding mode. In the case of a desire to see an outside through the laminated panel structure 100 or to feel a sense of openness, the light control component 10 may operate in a light transmission mode.

### Examples

The present invention will be described in more detail with reference to Examples, however, the present invention is not limited to these examples.

### <Measurement method>

The visible light transmittance of the laminated panel structure was also measured by the following method.

### [Visible light transmittance]

Visible light transmittance was measured using a spectrophotometer (product name "U-4100" manufactured by Hitachi High-Technologies Corporation) in accordance with JIS R 3106:2019.

### [Total solar transmittance (Tts)]

The total solar transmittance (Tts) was measured using a spectrophotometer ("U-4100" manufactured by Hitachi High-Tech Corporation) in accordance with ISO 13837. A measurement was made under the conditions of a scan speed of 300 nm/min and a slit width of 8 nm.

### <Evaluation method>

### [Contrast difference]

The laminated panel structures obtained in Examples and Comparative Examples were evaluated using the following criteria.
A: The difference in visible light transmittance between upon driving of the light control component and non-driving thereof of 50% or more
B: The difference in visible light transmittance between upon driving of the light control component and non-driving thereof of 25% or more and less than 50%
C: The difference in visible light transmittance between upon driving of the light control component and non-driving thereof of less than 25%

### [Example 1]

First, the following materials were prepared.
- A resin film for the first thermoplastic resin layer: A heat shielding resin film 1 with a thickness of 0.76 mm, composed of 100 parts by mass of a polyvinyl butyral resin (hydroxyl group amount 30.5 mol%, degree of acetalization 68.5 mol%, degree of acetylation 1 mol%, average degree of polymerization 1,700), 40 parts by mass of triethylene glycol-di-2-ethylhexanoate (3GO), and 0.5 parts by mass of tin-doped indium oxide particles (average particle size: 50 nm).
- A resin film for the second thermoplastic resin layer: A clear resin film 1 with a thickness of 0.76 mm, composed of 100 parts by mass of a polyvinyl butyral resin (hydroxyl group amount 30.5 mol%, degree of acetalization 68.5 mol%, degree of acetylation 1 mol%, average degree of polymerization 1,700) and 40 parts by mass of triethylene glycol-di-2-ethylhexanoate (3GO).
- A light control component: A polymer dispersed liquid crystal film with a thickness of 0.38 mm (product name "LC-W" manufactured by Gauzy Inc.), which operates in a light shielding mode when voltage is OFF, and operates in a light transmission mode when voltage is ON (70V)
- A first transparent panel: Standard clear glass as described in the description with a thickness of 2.5 mm
- A second transparent panel: Standard clear glass as described in the description with a thickness of 2.5 mm

The resin film for the first thermoplastic resin layer, the light control component, and the resin film for the second thermoplastic resin layer were overlapped in this order and thermocompressed at 70°C and -780 mbar (gauge pressure) to be integrated together, so as to obtain an interlayer film structure for a laminated panel. Next, on a transparent panel, the resulting interlayer film structure for a laminated panel and another transparent panel were overlaid and integrated together under the conditions of 90°C and 3 bar (gauge pressure) using an autoclave to obtain a laminated panel structure. As shown in Fig. 1, the laminated panel structure had a laminated structure of the first transparent panel/the first thermoplastic resin layer/the light control component/the second thermoplastic resin layer/the second transparent panel.

### [Example 2]

The same materials as in Example 1 were used, except that the first thermoplastic resin layer was changed to those shown below.
- A resin film for the first thermoplastic resin layer: A multi-layered heat shielding resin film 2 with a thickness of 0.9 mm, stacked with, in the following order, a resin film composed of 100 parts by mass of a polyvinyl butyral resin (hydroxyl group amount 30.5 mol%, degree of acetalization 68.5 mol%, degree of acetylation 1 mol%, average degree of polymerization 1,700) and 40 parts by mass of triethylene glycol-di-2-ethylhexanoate (3GO), a heat ray reflective film (Nano 80S manufactured by 3M Company), and a heat shielding resin film composed of 100 parts by mass of a polyvinyl butyral resin (hydroxyl group amount 30.5 mol%, degree of acetalization 68.5 mol%, degree of acetylation 1 mol%, average degree of polymerization 1,700), 40 parts by mass of triethylene glycol-di-2-ethylhexanoate (3GO), and 0.5 parts by mass of tin-doped indium oxide particles (average particle size: 50 nm).

### [Example 3]

The same materials as in Example 1 were used, except that the light control component was changed to that described below:
- A light control component: A suspended particle device film with a thickness of 0.4 mm (product name "LCF-1103DHA" manufactured by Showa Denko K. K.), which operates in a light shielding mode when voltage is OFF, and operates in a light transmission mode when voltage is ON (100 V)

### [Example 4]

The same materials as in Example 1 were used, except that the first thermoplastic resin layer and the light control component were changed to those described below:
- A resin film of the first thermoplastic resin layer: A multi-layered heat shielding resin film 2 with a thickness of 0.76 mm
- A light control component: A suspended particle device film with a thickness of 0.4 mm (product name "LCF-1103DHA" manufactured by Showa Denko K. K.), which operates in a light shielding mode when voltage is OFF, and operates in a light transmission mode when voltage is ON (100 V)

### [Comparative Example 1]

The same materials as in Example 1 were used, except that the first thermoplastic resin layer, the first transparent panel, and the second transparent panel were changed to those described below.
- A resin film for first thermoplastic resin layer: A clear resin film 1
- A first transparent panel: Infrared reflecting plate glass with a thickness of 2.5 mm
- A second transparent panel: Low-E glass with a thickness of 2.5 mm

### [Comparative Example 2]

The same materials as in Example 1 were used, except that the first thermoplastic resin layer, the light control component, the first transparent panel, and the second transparent panel were changed to those described below.
- A resin film for the first thermoplastic resin layer: A clear resin film 1
- A light control component: A suspended particle device film with a thickness of 0.4 mm (product name "LCF-1103DHA" manufactured by Showa Denko K. K.), which operates in a light shielding mode when voltage is OFF and operates in a light transmission mode when voltage is ON (100V)
- A first transparent panel: Infrared reflecting plate glass with a thickness of 2.5 mm
- A second transparent panel: Low-E glass with a thickness of 2.5 mm

**Table 1**

| | | | Example 1 | Example 2 | Example 3 | Example 4 | Comparative Example 1 | Comparative Example 2 |
|---|---|---|---|---|---|---|---|---|
| First transparent panel | Type | | Clear Glass | Clear Glass | Clear Glass | Clear Glass | IR refrective | IR refrective |
| | Thickness (mm) | | 2.5 | 2.5 | 2.5 | 2.5 | 2.5 | 2.5 |
| First thermoplastic resin layer | Type | | Heat shieldable PVB1 | Heat shieldable PVB2 | Heat shieldable PVB1 | Heat shieldable PVB2 | Color PVB | Color PVB |
| | Thickness (mm) | | 0.76 | 0.9 | 0.76 | 0.9 | 0.76 | 0.76 |
| Light control component | Type | | PDLC | PDLC | SPD | SPD | PDLC | SPD |
| | Thickness (mm) | | 0.38 | 0.38 | 0.4 | 0.4 | 0.38 | 0.4 |
| Second thermoplastic resin layer | Type | | PVB Clear | PVB Clear | PVB Clear | PVB Clear | PVB Clear | PVB Clear |
| | Thickness (mm) | | 0.76 | 0.76 | 0.76 | 0.76 | 0.76 | 0.76 |
| Second transparent panel | Type | | Clear Glass | Clear Glass | Clear Glass | Clear Glass | Low-E Glass | Low-E Glass |
| | Thickness (mm) | | 2.5 | 2.5 | 2.5 | 2.5 | 2.5 | 2.5 |
| Measurement | Light control component (light shielding mode) | % | 1.6 | 1.4 | 0.5 | 0.5 | 0.5 | 0.3 |
| | Light control component (light transmission mode) | % | 73.5 | 69.3 | 43.1 | 41.6 | 18.0 | 15.0 |
| | Contrast difference (light transmission mode - light shielding mode) | % | 72.0 | 67.8 | 42.6 | 41.2 | 17.5 | 14.7 |
| | Tts (light shielding mode) | % | 27.1 | 22.6 | 34.0 | 24.1 | 20.0 | 18.0 |
| | Tts (light transmission mode) | % | 66.5 | 50.4 | 57.1 | 41.3 | 30.0 | 25.0 |
| Evaluation | Contrast difference | | A | A | B | B | C | C |

As shown in Table 1, the laminated panel structures of Examples 1 to 4 satisfy the conditions that the difference in visible light transmittance between upon driving of the light control component and upon non-driving thereof is 20% or more, and the total solar transmittance (Tts) is 70% or less either upon driving of the light control component or upon non-driving thereof, so that the laminated panel structures could obtain the sufficient contrast difference between the maximum visible light transmittance and the minimum visible light transmittance upon control of light transmittance while having the effect of shielding heat.

The laminated panel structures of Comparative Examples 1 and 2, on the other hand, do not satisfy the conditions that the difference in visible light transmittance between upon driving of the light control component and upon non-driving thereof is 20% or more, and the total solar transmittance (Tts) is 70% or less either upon driving of the light control component or upon non-driving thereof, so that the laminated panel structures could not obtain the effect of shielding light and the satisfactory contrast difference.

### Reference Signs List

1 interlayer film structure for a laminated panel (interlayer film structure)
10, 10A, 10B light control component
11 light control layer
12 first substrate film
13 second substrate film
20 first thermoplastic resin layer
21 second thermoplastic resin layer
22 third thermoplastic resin layer
30, 31 transparent panels
100 laminated panel structure
110 automobile
111 roof portion

## Claims

1. An interlayer film structure for a laminated panel, to be used with being sandwiched between two transparent panels, comprising:
a thermoplastic resin sheet; and a light control component that is disposed with being sandwiched inbetween the thermoplastic resin sheet,
in laminated glass fabricated by bonding two clear glass plates via an interlayer film structure for laminated glass, a difference in visible light transmittance between upon driving of the light control component and upon non-driving thereof being 20% or more, and either upon driving of the light control component or upon non-driving thereof, a total solar transmittance (Tts) being 70% or less.

2. The interlayer film structure for a laminated panel according to claim 1, wherein the thermoplastic resin sheet comprises a heat shielding material.

3. The interlayer film structure for a laminated panel according to claim 1,
wherein
the thermoplastic resin sheet comprises a first thermoplastic resin layer and a second thermoplastic resin layer, and
the light control component is disposed between the first thermoplastic resin layer and the second thermoplastic resin layer.

4. The interlayer film structure for a laminated panel according to claim 3, wherein at least one of the first thermoplastic resin layer or the second thermoplastic resin layer comprises a heat shielding material.

5. The interlayer film structure for a laminated panel according to claim 1, wherein the light control component is an electrically controlled light control body.

6. A laminated panel structure comprising:
two transparent panels; and
an interlayer film for a laminated panel that is disposed between the two transparent panels,
the interlayer film for a laminated panel comprises a thermoplastic resin sheet and a light control component that is disposed with being sandwiched inbetween the thermoplastic resin sheet; and
a difference in visible light transmittance between upon driving of the light control component and upon non-driving thereof being 20% more, and either upon driving of the light control component or upon non-driving thereof, a total solar transmittance (Tts) being 70% or less.
